# EUROPÄISCHE PATENTANMELDUNG

(11) **EP 2 486 797 A1**
(43) Veröffentlichungstag der Anmeldung: **15.08.2012**
(21) Anmeldenummer: 11175762.1
(22) Anmeldetag: 28.07.2011
(51) Int. Cl.: A01N 47/18, A01N 47/22, A01N 47/24, A01N 47/30, A01N 25/00, A01N 25/32, A01N 43/836, A01N 43/824, A01P 13/02

(54) **Verwendung von Saatgutbehandlungs-Wirkstoffen aus der Gruppe der Carbamat-Insektizide als Safener bei Oxadiazolon-Herbiziden**

(71) Anmelder: Bayer CropScience AG, 40789 Monheim (DE)
(72) Erfinder: Die Erfindernennung liegt noch nicht vor

(57) **Zusammenfassung**

Gegenstand der Erfindung ist die Verwendung von Saatgutbehandlungs-Wirkstoffen aus der Gruppe der Carbamat-Insektizide als Safener, das heißt, als Mittel zum Vermeiden oder Reduzieren von phytotoxischen Wirkungen von Herbiziden aus der Gruppe der Oxadiazolone, an Nutzpflanzen, vorzugsweise Kulturpflanzen, insbesondere Reiskulturen.

## Beschreibung

Die vorliegende Erfindung betrifft nutzpflanzenschützende Mittel, welche Saatgutbehandlungs-Wirkstoffe aus der Gruppe der Carbamat-Insektizide als Safener zur Reduktion von phytotoxischen Wirkungen von Herbiziden in Nutzpflanzenkulturen enthalten.

Bei der Bekämpfung unerwünschter Pflanzen (Schadpflanzen, wie z. B. mono- oder dikotyle Unkräuter, Ungräser, Cyperaceen oder unerwünschte Kulturpflanzen mit oder ohne Resistenz/Toleranz gegenüber bestimmten Herbiziden, wie z.B. Glyphosate, Glufosinate, Atrazin, Imidazolinon-Herbizide, Sulfonylharnstoffe, (Hetero-)aryloxy-aryloxyalkylcarbonsäuren bzw. -phenoxyalkylcarbonsäuren, Cyclohexanedionoxime oder Auxininhibitoren) in Nutzpflanzenkulturen mit Herbiziden werden häufig auch die Nutzpflanzen durch die verwendeten Herbiziden mehr oder weniger stark geschädigt. Dieser unerwünschte phytotoxische Nebeneffekt tritt in besonderem Maße in erster Linie während des Auflaufens und im frühen Stadium der Nutzpflanzenentwicklung in Pflanzenkulturen, wie Getreide (z.B. Weizen, Triticale, Gerste, Roggen, Hafer und Hirse/Sorghum), Mais, Baumwolle, Soja, Reis, Kartoffeln, Sonnenblume, Flachs, Kaffee, Tabak, , Zuckerrohr, Canola, Raps, Rübe (z.B. Zuckerrübe und Futterrübe), Erdnuss, Gemüse (z.B. Tomate, Gurke, Bohne, Kohlgewächse, Zwiebeln und Salat), Obstpflanzen, Weiden, Rasen und Zierpflanzen. So sind z.B. zur erfolgreichen Bekämpfung von Unkräutern im Reis mit Herbiziden aus der Gruppe der Oxadiazolone, wie z.B. Oxadiazon und Oxadiargyl, relativ hohe Aufwandmengen notwendig, die zu Pflanzenschäden während des Auflaufens und im frühen Stadium der Pflanzenentwicklung führen.

Durch den Einsatz sogenannter "Safener" oder "Antidots" können in derartigen Fällen die Nutzpflanzen gegen die phytotoxischen Eigenschaften der Herbizide geschützt werden, ohne dass die herbizide Wirkung gegenüber den Schadpflanzen geschmälert oder wesentlich beeinträchtigt wird. In manchen Fällen ist sogar eine verbesserte herbizide Wirkung gegen Schadpflanzen beobachtet worden. Safener und Herbizide bilden daher Wirkstoffkombinationen ("Safener-Herbizid-Kombinationen"), im Folgenden als "nutzpflanzenschützende Mittel" bezeichnet, die in Nutzpflanzenkulturen verwendet werden.

Die bislang als Safener bekannten Verbindungen gehören zu einer großen Zahl unterschiedlicher, dem Fachmann bekannter chemischer Strukturklassen, wobei deren Eignung für die Safeneranwendung in der Regel auch von den chemischen Strukturen der Herbizide und von den Nutzpflanzenkulturen abhängig ist.

Die Bekämpfung von Schädlingen und phytopathogenen Pilzen durch die Behandlung des Saatguts von Pflanzen ist seit langem bekannt und die entsprechenden Saatgutbehandlungs-Wirkstoffe und Saatgutbehandlungsverfahren damit sind dem Fachmann bekannt. Kombinationen bestimmter Saatgutbehandlungs-Wirkstoffe mit bekannten Safenern wurden auch schon beschrieben, u.a. in WO 2006/008110 A1. Hier wurden beispielsweise Insektizide aus der Gruppe der Neonicotinoide und Herbizid-Safener als Wirkstoffkombinationen in der Saatgutbeize beschrieben, u.a. mit dem Ziel auch die Nutzpflanzenverträglichkeit nach anschließender Herbizidanwendung zu verbessern, jedoch fehlen entsprechende Beispiele aus denen eine erhöhte Nutzpflanzenverträglichkeit nach anschließender Herbizidanwendung hervorgeht.

Bei der Anwendung von Safener-Herbizid-Kombinationen zum Schutz der Nutzpflanzen vor Herbizidschädigungen hat sich gezeigt, dass die bekannten Safener in vielen Fällen Nachteile aufweisen können. Dazu zählen:
- der Safener vermindert die Wirkung der Herbizide gegen die Schadpflanzen;
- die nutzpflanzenschützenden Eigenschaften sind nicht ausreichend;
- in Kombination mit einem bestimmten Herbizid ist das Spektrum der Nutzpflanzen, in denen der Safener/Herbizid-Einsatz erfolgen soll, nicht ausreichend groß;
- ein bestimmter Safener ist nur mit wenigen Herbiziden kombinierbar;
- die Verwendung von Safenern erhöht die zu applizierende Aufwandmenge und Menge an Formulierung und kann damit anwendungstechnische Probleme verursachen.

Aus den genannten Gründen besteht ein Bedarf an der Bereitstellung alternativer nutzpflanzenschützender Mittel, die Verbindungen mit Safener-Wirkung und Herbizide enthalten.

Gegenstand der Erfindung ist die Verwendung von Saatgutbehandlungs-Wirkstoffen aus der Gruppe der Carbamat-Insektizide als Safener, das heißt, als Mittel zum Vermeiden oder Reduzieren von phytotoxischen Wirkungen von Herbiziden aus der Gruppe der Oxadiazolone an Nutzpflanzen, vorzugsweise Kulturpflanzen, insbesondere Reiskulturen.

Zu den Saatgutbehandlungs-Wirkstoffen aus der Gruppe der Carbamat-Insektizide im einzelnen gehören beispielsweise (gemäß Klassifizierung des "Compendium of Pesticide Common Names"; Internet: http-//www.alanwood.net/pesticides): Bendiocarb, Carbaryl; sowie die Verbindungen der Untergruppe Benzofuranyl-Methylcarbamat-Insektizide, wie Benfuracarb, Carbofuran, Carbosulfan, Decarbofuran, Furathiocarb; die Verbindungen der Untergruppe Dimethylcarbamat-Insektizide, wie Dimetan, Dimetilan, Hyquincarb, Isolan, Pirimicarb, Pyramat, Pyrolan; die Verbindungen der Untergruppe Oxim-Carbamat-Insektizide, wie Alanycarb, Aldicarb, Aldoxycarb, Butocarboxim, Butoxycarboxim, Methomyl, Nitrilacarb, Oxamyl, Tazimcarb, Thiocarboxime, Thiodicarb, Thiofanox; und die Verbindungen der Untergruppe Phenyl-Methylcarbamat-Insektizide, wie Allyxycarb, Aminocarb, Bufencarb, Butacarb, Carbanolate, Cloethocarb, CPMC, Dicresyl, Dimethacarb, Dioxacarb, EMPC, Ethiofencarb, Fenethacarb, Fenobucarb, Isoprocarb, Methiocarb, Metolcarb, Mexacarbate, Promacyl, Promecarb, Propoxur, Trimethacarb, XMC, Xylylcarb. Bevorzugt sind die Verbindungen Thiodicarb (Ia), Methiocarb (Ib); besonders bevorzugt Thiodicarb (Ia).

Mit dem Begriff "Saatgutbehandlungs-Wirkstoffe" werden die Wirkstoffe aus der Gruppe der Carbamat-Insektizide bezeichnet, die durch entsprechende Verfahren zum Schutz von Saatgut und keimenden Pflanzen vor dem Befall von Schädlingen mit Wirkstoff bzw. Wirkstoffkombinationen behandelt wird. Mit dem Begriff "Saatgut" sind im Folgenden sowohl generativ wie auch vegetativ gebildete Verbreitungs-Formen von Pflanzen umfasst, also auch Pflanzgut.

Bei den o.g. Verfahren kann das Saatgut mit Wirkstoff bzw. Wirkstoffkombinationen (weitere Wirkstoffen und/oder Formulierungsstoffe) gleichzeitig in einem Vorgang oder zu unterschiedlichen Zeiten behandelt werden.

Bei Saatgut, welches zu unterschiedlichen Zeiten behandelt wurde, können die einzelnen Wirk- bzw. Formulierungsstoffe in unterschiedlichen Schichten auf dem Saatgut enthalten sein. Dabei können die Schichten gegebenenfalls noch durch Zwischenschichten getrennt sein. Daneben können Wirkstoff bzw. Wirkstoffkombinationen auch auf dem Saatgut als Bestandteil einer Umhüllung oder als weitere Schichten zusätzlich zu einer Umhüllung aufgebracht werden. Ebenso kann das Saatgut nach der Behandlung einem Filmcoating - Verfahren unterzogen wird, um Staubabrieb am Saatgut zu vermeiden. Alle diese Kombinationsmöglichkeiten der Saatgutbehandlungs-Wirkstoffe, die entweder allein oder in den oben beschriebenen Kombinationen vorliegen können, werden im Folgenden unter dem Begriff "erfindungsgemäße Saatgutbehandlungs-Wirkstoffe" zusammenfassend beschrieben.

Ein Vorteil der Saatgut-Behandlung ist z.B., dass aufgrund der besonderen systemischen Eigenschaften der erfindungsgemäßen Saatgutbehandlungs-Wirkstoffe die Behandlung des Saatguts mit diesen Mitteln nicht nur das Saatgut selbst, sondern auch die daraus hervorgehenden Pflanzen nach dem Auflaufen - neben der erfindungsgemäßen Safener-Wirkung - auch gegen Schadorganismen (Schädlinge, phytopathogene Pilze) schützt. Auf diese Weise kann die unmittelbare Behandlung der Kultur zum Zeitpunkt der Aussaat oder kurz danach entfallen. Ein weiterer Vorteil ist darin zu sehen, dass durch die Behandlung des Saatguts mit den erfindungsgemäßen Saatgutbehandlungs-Wirkstoffen Keimung und Auflauf des behandelten Saatguts gefördert werden können. Ebenso ist es als vorteilhaft anzusehen, dass die erfindungsgemäßen Saatgutbehandlungs-Wirkstoffe insbesondere auch bei transgenem Saatgut eingesetzt werden können. Zu nennen ist auch, dass die erfindungsgemäßen Saatgutbehandlungs-Wirkstoffe in Kombination mit Mitteln der Signaltechnologie eingesetzt werden können, wodurch beispielhaft eine bessere Besiedlung mit Symbionten, wie zum Beispiel Rhizobien, Mycorrhiza und/oder endophytischen Bakterien, stattfindet und/oder es zu einer optimierten Stickstofffixierung kommt.

Die erfindungsgemäßen Saatgutbehandlungs-Wirkstoffe eignen sich zum Schutz von Saatgut jeglicher Pflanzensorte, die in der Landwirtschaft, im Gewächshaus, in Forsten oder im Gartenbau eingesetzt wird. Insbesondere handelt es sich dabei um Saatgut von Getreide (z.B. Weizen, Triticale, Gerste, Roggen, Hafer und Hirse/Sorghum), Mais, Baumwolle, Soja, Reis, Kartoffeln, Sonnenblume, Flachs, Kaffee, Tabak, , Zuckerrohr, Canola, Raps, Rübe (z.B. Zuckerrübe und Futterrübe), Erdnuss, Gemüse (z.B. Tomate, Gurke, Bohne, Kohlgewächse, Zwiebeln und Salat), Obstpflanzen, Weiden, Rasen und Zierpflanzen. Besondere Bedeutung kommt der Behandlung des Saatguts von Getreide (wie Weizen, Gerste, Roggen und Hafer), Mais, Soja, Baumwolle, Canola, Raps und Reis zu, wobei die Saatgut-Behandlung von Reis und Baumwolle, insbesondere von Reis, besonders bedeutsam ist.

Wie vorstehend bereits erwähnt, kommt auch der Behandlung von transgenem Saatgut mit den erfindungsgemäßen Saatgutbehandlungs-Wirkstoffen eine besondere Bedeutung zu. Aufgrund ihrer Safener-Eigenschaften können die erfindungsgemäßen Saatgutbehandlungs-Wirkstoffe auch in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch ganz oder partiellen Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Beispielsweise handelt es sich dabei um Pflanzen, die in der Regel zumindest ein heterologes Gen enthalten, das die Expression eines Polypeptids mit insbesondere insektiziden bzw. nematiziden Eigenschaften steuert. Die heterologen Gene in transgenem Saatgut können dabei aus Mikroorganismen wie Bacillus, Rhizobium, Pseudomonas, Serratia, Trichoderma, Clavibacter, Glomus oder Gliocladium stammen, wobei die Behandlung von transgenem Saatgut, das zumindest ein heterologes Gen enthält, das aus Bacillus sp. stammt, bevorzugt ist; besonders bevorzugt wenn es sich dabei um Bacillus thuringiensis handelt. Andere besondere Eigenschaften betreffen z.B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt. Weitere besondere Eigenschaften können in einer Toleranz oder Resistenz gegen abiotische Stressoren z.B. Hitze, Kälte, Trockenheit, Salz und ultraviolette Strahlung liegen. Bevorzugt ist die Anwendung der erfindungsgemäßen Saatgutbehandlungs-Wirkstoffe in wirtschaftlich bedeutenden transgenen Kulturen von Nutz- und Zierpflanzen, insbesondere der oben beschriebenen Pflanzenarten. Vorzugsweise können die erfindungsgemäßen Saatgutbehandlungs-Wirkstoffe in Nutzpflanzenkulturen eingesetzt werden, welche gegenüber den phytotoxischen Wirkungen bestimmter Herbizide ganz oder partiell resistent sind bzw. gentechnisch dazu gemacht worden sind.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z.B. EP 0221044, EP 0131624). Beschrieben wurden beispielsweise in mehreren Fällen:
- gentechnische Veränderungen von Kulturpflanzen zwecks Modifikation der in den Pflanzen synthetisierten Stärke (z.B. WO 92/011376 A, WO 92/014827 A, WO 91/019806 A);
- transgene Kulturpflanzen, welche gegen bestimmte Herbizide vom Typ Glufosinate (vgl. z.B. EP 0242236 A, EP 0242246 A) oder Glyphosate (WO 92/000377 A) oder der Sulfonylharnstoffe (EP 0257993 A, US 5,013,659) oder gegen Kombinationen oder Mischungen dieser Herbizide durch "gene stacking" resistent sind, wie transgenen Kulturpflanzen z.B. Mais oder Soja mit dem Handelsnamen oder der Bezeichnung Optimum^{™} GAT^{™} (Glyphosate ALS Tolerant);
- transgene Kulturpflanzen, beispielsweise Baumwolle, mit der Fähigkeit Bacillus thuringiensis-Toxine (Bt-Toxine) zu produzieren, welche die Pflanzen gegen bestimmte Schädlinge resistent machen (EP 0142924 A, EP 0193259 A);
- transgene Kulturpflanzen mit modifizierter Fettsäurezusammensetzung (WO 91/013972 A);
- gentechnisch veränderte Kulturpflanzen mit neuen Inhalts- oder Sekundärstoffen z.B. neuen Phytoalexinen, die eine erhöhte Krankheitsresistenz verursachen (EP 0309862 A, EP 0464461 A);
- gentechnisch veränderte Pflanzen mit reduzierter Photorespiration, die höhere Erträge und höhere Stresstoleranz aufweisen (EP 0305398 A);
- transgene Kulturpflanzen, die pharmazeutisch oder diagnostisch wichtige Proteine produzieren ("molecular pharming");
- transgene Kulturpflanzen, die sich durch höhere Erträge oder bessere Qualität auszeichnen;
- transgene Kulturpflanzen, die sich durch eine Kombinationen z.B. der o.g. neuen Eigenschaften auszeichnen ("gene stacking").

Zahlreiche molekularbiologische Techniken, mit denen neue transgene Pflanzen mit veränderten Eigenschaften hergestellt werden können, sind im Prinzip bekannt; siehe z.B. I. Potrykus und G. Spangenberg (eds.) Gene Transfer to Plants, Springer Lab Manual (1995), Springer Verlag Berlin, Heidelberg. oder Christou, "Trends in Plant Science" 1 (1996) 423-431). Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe von Standardverfahren können z.B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden, siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996. Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet. Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codierenden Sequenzen eines Genprodukts aufweisen, aber nicht vollkommen identisch sind. Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z.B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106). Die Expression der Nukleinsäuremoleküle kann auch in den Organellen der Pflanzenzellen stattfinden.

Die transgenen Pflanzenzellen können nach bekannten Techniken zu ganzen Pflanzen regeneriert werden bis zu dem Stadium, welches eine Saat- bzw. Pflanzgut-Behandlung ermöglicht. Bei den transgenen Pflanzen kann es sich prinzipiell um Pflanzen jeder beliebigen Pflanzenspezies handeln, d.h., sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Die erfindungsgemäßen Saatgutbehandlungs-Wirkstoffe können in transgenen Kulturen eingesetzt werden, welche ganz oder partiell gegen Wuchsstoffe, wie z.B. 2,4 D, Dicamba oder gegen Herbizide, die essentielle Pflanzenenzyme, z.B. Acetolactatsynthasen (ALS), EPSP Synthasen, Glutaminsynthasen (GS) oder Hydoxyphenylpyruvat Dioxygenasen (HPPD) hemmen, respektive gegen Herbizide aus der Gruppe der Sulfonylharnstoffe, der Glyphosate, Glufosinate oder Benzoylisoxazole und analogen Wirkstoffe, oder gegen beliebige Kombinationen dieser Wirkstoffe, resistent sind; besonders bevorzugt transgene Kulturpflanzen, die gegen eine Kombination von Glyphosaten und Glufosinaten, Glyphosaten und Sulfonylharnstoffen oder Imidazolinonen resistent sind; ganz besonders bevorzugt transgene Kulturpflanzen, wie z.B. Mais oder Soja mit dem Handelsnamen oder der Bezeichnung Optimum^{™} GAT^{™} (Glyphosate ALS Tolerant). Hierbei treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise eine gute Beeinflussung von Wuchs und Ertrag der transgenen Kulturpflanzen.

Gegenstand der Erfindung ist deshalb auch die Verwendung der erfindungsgemäßen Saatgutbehandlungs-Wirkstoffe zur Bekämpfung von Schadpflanzen in transgenen Kulturpflanzen.

Im Rahmen der vorliegenden Erfindung werden die erfindungsgemäßen Saatgutbehandlungs-Wirkstoffe unmittelbar oder in einer geeigneten Formulierung auf das Saatgut aufgebracht. Vorzugsweise wird das Saatgut in einem Zustand behandelt, in dem es so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde. So kann zum Beispiel Saatgut verwendet werden, das geerntet, gereinigt und bis zu einem Feuchtigkeitsgehalt von unter 15 Gew.-% getrocknet wurde. Alternativ kann auch Saatgut verwendet werden, das nach dem Trocknen z. B. mit Wasser behandelt und dann erneut getrocknet wurde. Im Allgemeinen muss bei der Behandlung des Saatguts darauf geachtet werden, dass die Menge der auf das Saatgut aufgebrachten erfindungsgemäßen Saatgutbehandlungs-Wirkstoffe und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Die erfindungsgemäßen Saatgutbehandlungs-Wirkstoffe können unmittelbar aufgebracht werden, also ohne weitere Komponenten zu enthalten und ohne verdünnt worden zu sein. In der Regel ist es vorzuziehen, sie in Form einer geeigneten Formulierung auf das Saatgut aufzubringen. Geeignete Formulierungen und Verfahren für die Saatgutbehandlung sind dem Fachmann bekannt und werden z.B. in den folgenden Dokumenten beschrieben: US 4,272,417 A, US 4,245,432 A, US 4,808,430 A, US 5,876,739 A, US 2003/0176428 A1, WO 2002/080675 A1, WO 2002/028186 A2. Die erfindungsgemäßen Saatgutbehandlungs-Wirkstoffe können in die üblichen Beizmittel-Formulierungen überführt werden, wie Lösungen, Emulsionen, Suspensionen, Pulver, Schäume, Slurries oder andere Hüllmassen für Saatgut, sowie ULV-Formulierungen. Diese Formulierungen werden in bekannter Weise hergestellt, indem man die erfindungsgemäßen Saatgutbehandlungs-Wirkstoffe mit üblichen Zusatzstoffen vermischt, wie zum Beispiel übliche Streckmittel sowie Lösungs- oder Verdünnungsmittel, Farbstoffe, Netzmittel, Dispergiermittel, Emulgatoren, Entschäumer, Konservierungsmittel, sekundäre Verdickungsmittel, Kleber, Gibberelline und auch Wasser; im Folgenden als "erfindungsgemäß verwendbare Beizmittel-Formulierung" bezeichnet.

Als Farbstoffe, die in den erfindungsgemäß verwendbaren Beizmittel-Formulierungen enthalten sein können, kommen alle für derartige Zwecke üblichen Farbstoffe in Betracht. Dabei sind sowohl in Wasser wenig lösliche Pigmente als auch in Wasser lösliche Farbstoffe verwendbar. Als Beispiele genannt seien die unter den Bezeichnungen Rhodamin B, C.I. Pigment Red 112 und C.I. Solvent Red 1 bekannten Farbstoffe. Als Netzmittel, die in den erfindungsgemäß verwendbaren Beizmittel-Formulierungen enthalten sein können, kommen alle zur Formulierung von agrochemischen Wirkstoffen üblichen, die Benetzung fördernden Stoffe in Frage. Vorzugsweise verwendbar sind Alkylnaphthalin-Sulfonate, wie Diisopropyl- oder Diisobutyl-naphthalin-Sulfonate. Als Dispergiermittel und/oder Emulgatoren, die in den erfindungsgemäß verwendbaren Beizmittel-Formulierungen enthalten sein können, kommen alle zur Formulierung von agrochemischen Wirkstoffen üblichen nichtionischen, anionischen und kationischen Dispergiermittel in Betracht. Vorzugsweise verwendbar sind nichtionische oder anionische Dispergiermittel oder Gemische von nichtionischen oder anionischen Dispergiermitteln. Als geeignete nichtionische Dispergiermittel sind insbesondere Ethylenoxid-Propylenoxid Blockpolymere, Alkylphenolpolyglykolether sowie Tristryrylphenolpolyglykolether und deren phosphatierte oder sulfatierte Derivate zu nennen. Geeignete anionische Dispergiermittel sind insbesondere Ligninsulfonate, Polyacrylsäuresalze und Arylsulfonat-Formaldehydkondensate. Als Entschäumer können in den erfindungsgemäß verwendbaren Beizmittel-Formulierungen alle zur Formulierung von agrochemischen Wirkstoffen üblichen schaumhemmenden Stoffe enthalten sein. Vorzugsweise verwendbar sind Silikonentschäumer und Magnesiumstearat. Als Konservierungsmittel können in den erfindungsgemäß verwendbaren Beizmittel-Formulierungen alle für derartige Zwecke in agrochemischen Mitteln einsetzbaren Stoffe vorhanden sein. Beispielhaft genannt seien Dichlorophen und Benzylalkoholhemiformal. Als sekundäre Verdickungsmittel, die in den erfindungsgemäß verwendbaren Beizmittel-Formulierungen enthalten sein können, kommen alle für derartige Zwecke in agrochemischen Mitteln einsetzbaren Stoffe in Frage. Vorzugsweise in Betracht kommen Cellulosederivate, Acrylsäurederivate, Xanthan, modifizierte Tone und hochdisperse Kieselsäure. Als Kleber, die in den erfindungsgemäß verwendbaren Beizmittel-Formulierungen enthalten sein können, kommen alle üblichen in Beizmitteln einsetzbaren Bindemittel in Frage. Vorzugsweise genannt seien Polyvinylpyrrolidon, Polyvinylacetat, Polyvinylalkohol und Tylose. Als Gibberelline, die in den erfindungsgemäß verwendbaren Beizmittel-Formulierungen enthalten sein können, kommen vorzugsweise die Gibberelline A1, A3 (= Gibberellinsäure), A4 und A7 infrage, besonders bevorzugt verwendet man die Gibberellinsäure. Die Gibberelline sind bekannt (vgl. R. Wegler "Chemie der Pflanzenschutz- und Schädlingsbekämpfungsmittel", Bd. 2, Springer Verlag, 1970, S. 401-412).

Die erfindungsgemäß verwendbaren Beizmittel-Formulierungen können entweder direkt oder nach vorherigem Verdünnen mit Wasser zur Behandlung von Saatgut der verschiedensten Art eingesetzt werden. So lassen sich die Konzentrate oder die daraus durch Verdünnen mit Wasser erhältlichen Zubereitungen einsetzen zur Beizung des Saatgutes von Getreide, wie Weizen, Triticale, Gerste, Roggen, Hafer und Hirse/Sorghum, sowie des Saat- bzw. Pflanzgutes von Mais, Baumwolle, Soja, Reis, Kartoffeln, Sonnenblume, Flachs, Kaffee, Tabak, , Zuckerrohr, Canola, Raps, Rüben, Erdnuss, Erbsen, Bohnen, Weiden-, Rasen- und Zierpflanzen oder auch von Gemüse- und Obstpflanzen-Saatgut der verschiedensten Natur. Die erfindungsgemäß verwendbaren Beizmittel-Formulierungen oder deren verdünnte Zubereitungen können auch zum Beizen von Saatgut transgener Pflanzen eingesetzt werden. Dabei können im Zusammenwirken mit den durch Expression gebildeten Substanzen auch zusätzliche synergistische Effekte auftreten.

Zur Behandlung von Saatgut mit den erfindungsgemäß verwendbaren Beizmittel-Formulierungen oder den daraus durch Zugabe von Wasser hergestellten Zubereitungen kommen alle üblicherweise für die Beizung einsetzbaren Mischgeräte in Betracht. Im einzelnen geht man bei der Beizung so vor, dass man das Saatgut in einen Mischer gibt, die jeweils gewünschte Menge an Beizmittel-Formulierungen entweder als solche oder nach vorherigem Verdünnen mit Wasser hinzufügt und bis zur gleichmäßigen Verteilung der Formulierung auf dem Saatgut mischt. Gegebenenfalls schließt sich ein Trocknungsvorgang an.

Die Aufwandmenge an den erfindungsgemäß verwendbaren Beizmittel-Formulierungen kann innerhalb eines größeren Bereiches variiert werden. Sie richtet sich nach dem jeweiligen Gehalt des/der Wirkstoffs/Wirkstoffe in den Formulierungen und nach dem Saatgut. Die erforderlichen Aufwandmengen bei den erfindungsgemäßen Saatgutbehandlungs-Wirkstoffen können je nach verwendetem Herbizid und Art der zu schützenden Nutzpflanze innerhalb weiter Grenzen variiert werden und liegt in der Regel im Bereich von 0,05 bis 200 g pro Kilogramm Saatgut, vorzugsweise von 0,1 bis 100 g pro Kilogramm Saatgut.

Die Safener-Verwendung der Saatgutbehandlungs-Wirkstoffen aus der Gruppe der Carbamat-Insektizide, im Folgenden als "erfindungsgemäße Safener" bezeichnet, sind in Verbindung mit Herbiziden als nutzpflanzenschützende Mittel geeignet zur selektiven Bekämpfung von Schadpflanzen in einer Reihe von Pflanzenkulturen eingesetzt werden, z.B. in Pflanzenkulturen wie Ackerbaukulturen z.B. monokotylen Ackerbaukulturen wie Getreide (z.B. Weizen, Triticale, Gerste, Roggen, Hafer, Reis, Mais, Hirse/Sorghum) oder dikotylen Ackerbaukulturen wie Rüben (z.B. Zuckerrübe und Futterrübe), Zuckerrohr, Canola, Raps, Baumwolle, Sonnenblumen und Leguminosen z.B. der Gattungen Glycine (z.B. Glycine max. (Soja) wie nichttransgene Glycine max. (z.B. konventionelle Sorten wie STS-Sorten) oder transgene Glycine max. (z.B. RR-Soja oder LL-Soja und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel, Salat, Gurke, in Obstanbauanlagen (Plantagenkulturen) oder Grün-, Rasen- und Weideflächen, insbesondere in Reiskulturen (gepflanzt oder gesät unter'Upland'- oder'Paddy'-Bedingungen als Trocken- oder Nass-Reis mit Indica- und/oder Japonica-Arten sowie Hybriden/Mutanten/GMOs).

Gegenstand der Erfindung sind auch nutzpflanzenschützende Mittel, welche die Saatgutbehandlungs-Wirkstoffe aus der Gruppe der Carbamat-Insektizide in Kombination mit Herbiziden, und gegebenenfalls Formulierungshilfsmitteln enthalten.

Dabei erfolgt die Applikation der Herbizid-Komponente des nutzpflanzenschützenden Mittels entweder vor, bei oder nach dem Ausbringen des mit dem erfindungsgemäßen Safener behandelten Saatguts der Nutzpflanzen.

Die Applikation der Herbizide kann erfolgen vor dem Auflaufen der Schadpflanzen als auch auf die aufgelaufenen Schadpflanzen (z.B. Unkräuter, Ungräser, Cyperaceen oder unerwünschte Kulturpflanzen) unabhängig vom Stadium der ausgesäten/ausgepflanzten Kultur. Die erfindungsgemäßen Safener sind dann je nach Anwendungszeitpunkt der Herbizide in der Lage, schädliche Nebenwirkungen der Herbizide bei Kulturpflanzen zu reduzieren oder völlig aufzuheben, ohne die Wirksamkeit der Herbizide gegen Schadpflanzen zu beeinträchtigen oder wesentlich zu reduzieren. Dabei können auch Schädigungen, welche durch die Anwendung mehrerer Herbizide und/oder Pestizide entstehen, z.B. in Kombination mit weiteren applizierten Insektiziden oder Fungiziden, wesentlich reduziert oder völlig aufgehoben werden. Hierdurch kann das Einsatzgebiet herkömmlicher Herbizide ganz erheblich erweitert werden.

Die Herbizide werden in der Regel nach entsprechender Verdünnung entweder direkt auf die Anbaufläche, auf die bereits gekeimten Schad- und/oder Nutzpflanzen oder auf die bereits aufgelaufenen Schad- und/oder Nutzpflanzen appliziert. Bevorzugt ist die zeitnahe Anwendung des erfindungsgemäßen Safeners mit dem Herbizid. Besonders bevorzugt ist die Anwendung des erfindungsgemäßen Safeners auf dem Saatgut mit der späteren Applikation der Herbizide nach der Aussaat im Vor- oder Nachauflaufverfahren.

Gegenstand der Erfindung ist daher auch ein Verfahren zur selektiven Bekämpfung von Schadpflanzen in Nutzpflanzenkulturen, dadurch gekennzeichnet, dass man eine wirksame nutzpflanzenschützende Menge einer oder mehrerer Verbindungen der Saatgutbehandlungs-Wirkstoffe aus der Gruppe der Carbamat-Insektizide, gegebenenfalls in Form einer Beizmittel-Formulierung, vor, nach oder gleichzeitig mit dem Saatgut der Nutzpflanzen, mit einer gegen Schadpflanzen wirksamen Menge eines oder mehrerer Herbizide auf Samen, Pflanzenteile oder Ackerboden (bzw. ins Wasser z.B. bei Reiskulturen) appliziert.

Die vorteilhaften Wirkungen der erfindungsgemäßen Safener werden beobachtet, wenn man sie zusammen mit den Herbiziden wie o.g. einsetzt. Auch ist es möglich die Herbizid-Applikation mehrfach zu wiederholen. Manchmal kann es sinnvoll sein, eine Vorauflaufapplikation mit einer Nachauflaufapplikation zu kombinieren. Meist bietet sich die Anwendung des Herbizids als Nachauflaufapplikation auf die Nutz- oder Kulturpflanze an. Oftmals werden bei der Anwendung der erfindungsgemäßen Safener in Kombination mit Herbiziden neben der Safener-Wirkung auch Wirkungsverstärkungen in der Herbizidwirkung gegenüber Schadpflanzen beobachtet. Weiterhin ist das Wachstum der Nutz- und Kulturpflanzen in vielen Fällen verbessert (bessere Vitalität) und es können die Ernteerträge erhöht werden.

Das Gewichtsverhältnis erfindungsgemäßen Safener zu den Herbiziden kann innerhalb weiter Grenzen variiert werden und kann wie folgt berechnet werden (g= Gramm, a.i. = Aktivsubstanz, kg= Kilogramm, ha = Hektar):, [Aufwandmengenbereich der Saatgutbehandlungs-Wirkstoffe in g a.i./kg Saatgut x kg Aussaatstärke/ha] : [Aufwandmengenbereich Herbizide in g a.i./ha]., Das optimale Gewichtsverhältnis von erfindungsgemäßen Safener zu Herbizid hängt somit sowohl von dem jeweils eingesetzten Saatgutbehandlungs-Wirkstoffen und dem jeweiligen Herbizid als auch von der Art der zu schützenden Nutz- oder Kulturpflanze und deren Aussaatstärke ab - alles Parameter die dem Fachmann bekannt sind. Die für eine erfolgreiche Behandlung notwendigen Mengen und Gewichtsverhältnisse können daher durch einfache Vorversuche ermittelt werden.

Die Herbizide der nutzpflanzenschützenden Mittel können eingesetzt werden gegen ein breites Spektrum wirtschaftlich wichtiger mono- und dikotyler Schadpflanzen wie Unkräuter, Ungräser oder Cyperaceen auf, einschließlich Arten die resistent sind gegen herbizide Wirkstoffe wie Glyphosate, Glufosinate, Atrazin, Imidazolinon-Herbizide, Sulfonylharnstoffe, (Hetero-)aryloxy-aryloxyalkylcarbonsäuren bzw. - phenoxyalkylcarbonsäuren (sog. 'Fops'), Cyclohexanedionoxime (sog. 'Dims') oder Auxininhibitoren. Auch schwer bekämpfbare perennierende Schadpflanzen, die aus Rhizomen, Wurzelstöcken oder anderen Dauerorganen austreiben, werden durch die Herbizide gut erfasst. Dabei können die Substanzen z.B. im Vorsaat-, Vorauflauf- oder Nachauflaufverfahren ausgebracht werden, z.B. gemeinsam oder getrennt. Bevorzugt ist neben der Anwendung im Vorauflaufverfahren z. B. die Anwendung im Nachauflaufverfahren, insbesondere auf die aufgelaufenen Schadpflanzen. Im einzelnen seien beispielhaft einige Vertreter der mono- und dikotylen Unkrautflora genannt, die durch die Herbizide kontrolliert werden können, ohne dass durch die Nennung eine Beschränkung auf bestimmte Arten erfolgen soll. Auf der Seite der monokotylen Unkrautarten werden z.B. Avena spp., Alopecurus spp., Apera spp., Brachiaria spp., Bromus spp., Digitaria spp., Lolium spp., Echinochloa spp., Leptochloa spp., Fimbristylis spp., Panicum spp., Phalaris spp., Poa spp., Setaria spp. sowie Cyperusarten aus der annuellen Gruppe und auf seiten der perennierenden Spezies Agropyron, Cynodon, Imperata sowie Sorghum und auch ausdauernde Cyperusarten gut erfasst. Bei dikotylen Unkrautarten erstreckt sich das Wirkungsspektrum auf Arten wie z.B. Abutilon spp., Amaranthus spp., Chenopodium spp., Chrysanthemum spp., Galium spp., Ipomoea spp., Kochia spp., Lamium spp., Matricaria spp., Pharbitis spp., Polygonum spp.,Sida spp., Sinapis spp., Solanum spp., Stellaria spp., Veronica spp. Eclipta spp., Sesbania spp., Aeschynomene spp. und Viola spp., Xanthium spp., auf der annuellen Seite sowie Convolvulus, Cirsium, Rumex und Artemisia bei den perennierenden Unkräutern.

Werden die Herbizide vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von zwei bis vier Wochen vollkommen ab. Bei Applikation der Herbizide auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird. Die Herbizide können auch in Reis in das Wasser appliziert werden und werden dann über Boden, Sproß und Wurzel aufgenommen.

Die Herbizide zeichnen sich durch eine schnell einsetzende und lang andauernde herbizide Wirkung aus. Ihre Regenfestigkeit ist in der Regel günstig. Als besonderer Vorteil fällt ins Gewicht, dass in Verbindung mit den erfindungsgemäßen Safenern die verwendeten und wirksamen Dosierungen der Herbizide geringer eingestellt werden können. Somit wird durch die erfindungsgemäßen nutzpflanzenschützenden Mittel eine erhebliche Reduzierung der nötigen Aufwandmenge der Wirkstoffe ermöglicht mit positiven Effekten (u.a. Herbizid-Einsatz in empfindlichen Kulturen z.T. erst möglich; Grundwasser-Kontaminationen praktisch vermieden). Daneben erlauben die erfindungsgemäßen Safener auch die Bekämpfung eines breiteren Spektrums von Unkräutern, Ungräsern und Cyperaceen, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraums. Teilweise wird durch den Einsatz der nutzpflanzenschützende Mittel auch die Menge an schädlichen Inhaltsstoffen, wie Stickstoff oder Ölsäure, und deren Eintrag in den Boden reduziert.

In bevorzugter Ausführungsform sind die erfindungsgemäßen nutzpflanzenschützende Mittel hervorragend geeignet zur selektiven Bekämpfung von Schadpflanzen in Reiskulturen. Hierzu zählen alle möglichen Formen des Reisanbaus mit den unterschiedlichsten Bedingungen, wie Trocken- ("upland", "dry") oder Wasseranbau ("paddy"), wobei die Bewässerung natürlich ("rainfall") und/oder künstlich ("irrigated", "flooded") erfolgen kann. Bei dem hierbei verwendeten Reis kann es sich um konventionell gezüchtetes Saatgut, Hybrid-Saatgut, aber auch um resistentes, zumindest tolerantes Saatgut (mutagen oder transgen erzeugt) handeln, die sich aus den Formenkreisen Indica oder Japonica sowie aus Kreuzungen der beiden ableiten können. Die erfindungsgemäßen nutzpflanzenschützende Mittel können in allen Applikationsarten, die für Reis-Herbizide üblich sind, eingesetzt werden. Besonders vorteilhaft werden sie in der Spritzapplikation und/oder in der "submerged application" eingesetzt. Bei der sogenannten "submerged application" bedeckt das Anstauwasser schon zum Zeitpunkt der Applikation die Erde um bis zu 3 -20 cm. Die erfindungsgemäßen Herbizid-Kombinationen werden dann direkt, z.B. in Form eines Granulats in das Wasser der angestauten Felder gegeben. Weltweit wird die Spritzapplikation vorwiegend bei gesätem Reis ("direct seeded rice") und die sogenannte "submerged application" vorwiegend bei verpflanztem Reis ("transplanted rice") eingesetzt. Die Herbizide der nutzpflanzenschützenden Mittel erfassen ein breites, insbesondere für Reiskulturen spezifisches Unkrautspektrum. Auf der Seite der monokotylen Unkräuter werden z.B. Gattungen, wie Echinochloa spp., Panicum spp., Poa spp., Leptochloa spp., Brachiaria spp., Digitaria spp., Setaria spp. Cyperus spp., Monochoria spp., Fimbristylis spp., Sagittaria spp., Eleocharis spp., Scirpus spp., Alisma spp., Aneilema spp., Blyxa spp., Eriocaulon spp., Potamogeton spp. und ähnliche, gut erfasst, insbesondere die Arten Echinochloa oryzicola, Monochoria vaginalis, Eleocharis acicularis, Eleocharis kuroguwai, Cyperus difformis, Cyperus serotinus, Sagittaria pygmaea, Alisma canaliculatum, Scirpus juncoides. Bei den dikotylen Unkräutern erstreckt sich das Wirkungsspektrum auf Gattungen, wie z.B. Polygonum spp., Rorippa spp., Rotala spp., Lindernia spp., Bidens spp., Sphenoclea spp., Dopatrium spp., Eclipta spp., Elatine spp., Gratiola spp., Lindernia spp., Ludwigia spp., Oenanthe spp., Ranunculus spp., Deinostema spp. und ähnliche. Insbesondere Arten, wie Rotala indica, Sphenoclea zeylanica, Lindernia procumbens, Ludwigia prostrate, Potamogeton distinctus, Elatine triandra, Oenanthe javanica werden gut erfasst.

Die o.g. Eigenschaften und Vorteile sind in der praktischen Unkrautbekämpfung gefordert, um landwirtschaftliche/ forstwirtschaftliche/ gärtnerische Kulturen oder Grünland/Weideflächen von unerwünschten Konkurrenzpflanzen freizuhalten und damit die Erträge qualitativ und quantitativ zu sichern und/oder zu erhöhen. Der technische Standard wird durch die neuen nutzpflanzenschützende Mittel hinsichtlich der beschriebenen Eigenschaften deutlich übertroffen.

Gegenstand der vorliegenden Erfindung ist weiterhin ein Verfahren zum Schützen von Kultur- oder Nutzpflanzen vor phytotoxischen Wirkungen von Herbiziden, welche Schäden an Pflanzen verursachen, dadurch gekennzeichnet, dass man die Wirkstoffe aus der Gruppe der Carbamat-Insektizide als Safener auf dem Saatgut der Nutzpflanzen, vorzugsweise in einer wirksamen Menge, anwendet.

Bevorzugt ist dieses Verfahren in Reiskulturen (gepflanzt oder gesät unter 'Upland'- oder'Paddy'-Bedingungen mit Indica- und/oder Japonica-Arten sowie Hybriden/Mutanten/GMOs), welches dadurch gekennzeichnet ist, dass die Herbizide auf die Pflanzen (z.B. Schadpflanzen wie mono- oder dikotyle Unkräuter, Ungräser, Cyperaceen oder unerwünschte Kulturpflanzen), das Saatgut (z.B. Körner, Samen oder vegetative Vermehrungsorgane wie Knollen oder Sprossteile mit Knospen) oder die Fläche, auf der die Pflanzen wachsen (z.B. die Anbaufläche, die auch von Wasser bedeckt sein kann), ausgebracht werden, z.B. gemeinsam oder getrennt. Dabei können eines oder mehrere Herbizide vor, nach oder gleichzeitig mit den ausgesäten erfindungsgemäßen Safenern auf die Pflanzen, das Saatgut oder die Fläche, auf der die Pflanzen wachsen (z.B. die Anbaufläche), appliziert werden.

Die Herbizide, die mit den erfindungsgemäßen Safenern kombiniert werden können, gehören zur Gruppe der Oxadiazolone und sind im einzelnen die Verbindungen Dimefuron, Methazole, Oxadiargyl und Oxadiazon, bevorzugt Oxadiargyl und Oxadiazon.

Weitere Informationen zu dieser Herbizidgruppe und den Einzel-Wirkstoffen finden sich beispielsweise im "The Pesticide Manual", The British Crop Protection Council, 14th Edition, 2006, oder aus dem e-Pesticide Manual, Version 4.0, British Crop Protection Council 2006 oder auch im "Compendium of Pesticide Common Names".

Wenn die handelsüblichen Wirkstoffe vorzugsweise in Form eines speziellen Salzes oder Esters der angegebenen Verbindung vorliegt, so gilt der Hinweis auf die Verbindung vorzugsweise auch für die übliche Handelsform, sofern nicht diese ebenfalls angegeben ist.

Die obengenannten Wirkstoffe sind für die Kombination mit den erfindungsgemäßen Safener (= Safener-Verwendung der Saatgutbehandlungs-Wirkstoffen aus der Gruppe der Nicotinoid-Insektizide) im nutzpflanzenschützenden Mittel geeignet, vorzugsweise in Kombination mit den Verbindungen Thiodicarb (Ia) oder Methiocarb (Ib):
Ia) + Dimefuron, (Ia) + Methazole, (Ia) + Oxadiargyl, (Ia) + Oxadiazon;
(Ib) + Dimefuron, (Ib) + Methazole, (Ib) + Oxadiargyl, (Ib) + Oxadiazon.

Die Aufwandmenge der Herbizide können in einem weiten Bereich variieren, und liegen beispielsweise zwischen 0,1 g und 10000 g AS/ha (AS/ha bedeutet dabei im Folgenden "Aktivsubstanz pro Hektar" = bezogen auf 100%igen Wirkstoff), bevorzugt zwischen 0,5 g und 8000 g AS/ha, besonders bevorzugt zwischen 1 g und 6000 g AS/ha.

Die Bereiche für geeignete Mengenverhältnisse der nutzpflanzenschützenden Mittel (erfindungsgemäße Safener-Herbizid-Kombination) können auch in einem weiten Bereich variieren und sie ergeben sich z.B. aus den genannten Aufwandmengen für die Einzelstoffe. In den erfindungsgemäßen Kombinationen können die Aufwandmengen der Herbizide in der Regel erhöht werden.

Im Falle der Anwendung der Herbizid-Komponente als Wirkstoffformulierungen oder Coformulierungen enthalten diese gegebenenfalls in der Regel die jeweils üblichen Haft-, Netz-, Dispergier-, Emulgier-, Penetrations--, Konservierungs--, Frostschutz- und Lösungsmittel, Füll-, Träger- und Farbstoffe, Entschäumer, Verdunstungshemmer und den pH-Wert und die Viskosität beeinflussende Mittel und können in Abhängigkeit von den vorgegebenen chemisch-physikalischen und biologischen Parametern auf verschiedene Arten formuliert werden. Als Formulierungsarten sind beispielsweise geeignet:
- Emulgierbare Konzentrate, die durch Auflösen der Wirkstoffe in einem organischen Lösungsmittel, z.B. Butanol, Cyclohexanon, Dimethylformamid, Xylol oder auch höher siedenden Kohlenwasserstoffen oder Mischungen der organischen Lösungsmittel unter Zusatz von einem oder mehreren Tensiden ionischer und/oder nichtionischer Art (Emulgatoren) hergestellt werden. Geeignete Emulgatoren sind beispielsweise alkylarylsulfonsaure Calcium-Salze, Fettsäurepolyglykolester, Alkylarylpolyglykolether, Fettalkoholpolyglykol-ether, Propylenoxid-Ethylenoxid-Kondensationsprodukte, Alkylpolyether, Sorbitanester und Polyoxyethylensorbitanfettsäureester;
- Stäubemittel, die durch Vermahlen der Wirkstoffe mit feinverteilten festen anorganischen oder organischen Stoffen, z.B. Talkum, natürlichen Tonen, wie Kaolin, Bentonit und Pyrophyllit, Diatomeenerde oder Mehlen erhalten werden.
- auf Wasser oder Öl basierende Suspensionskonzentrate, die beispielsweise durch Naßvermahlung mittels Perlmühlen hergestellt werden können;
- wasserlösliche Pulver;
- wasserlösliche Konzentrate;
- Granulate, wie wasserlösliche Granulate, wasserdispergierbare Granulate sowie Granulate für die Streu- und Bodenapplikation;
- Spritzpulver, die neben Wirkstoff noch Verdünnungs- oder Inertstoffe und Tenside enthalten;
- Kapselsuspensionen und Mikrokapseln;
- Ultra-Low-Volume-Formulierungen.

Die oben genannten Formulierungsarten sind dem Fachmann bekannt und werden beispielsweise beschrieben in: K. Martens, "Spray Drying Handbook", 3rd Ed., G. Goodwin Ltd., London. 1979; W. van Valkenburg, "Pesticide Formulations", Marcel Dekker, N.Y. 1973; Winnacker-Küchler, "Chemische Technologie", Band 7, C. Hanser Verlag München, 4. Auflage 1986; "Perry's Chemical Engineer's Handbook", 5th Ed., McGraw-Hill, N.Y. 1973, Seiten 8-57.

Die notwendigen Formulierungshilfsmittel wie Inertmaterialien, Tenside, Lösungsmittel und weitere Zusatzstoffe sind ebenfalls bekannt und werden beispielsweise beschrieben in: McCutcheon's "Detergents and Emulsifiers Annual", MC Publ. Corp., Ridgewood N.J.; C. Marsden, "Solvents Guide", 2nd Ed., Interscience, N.Y. 1963; H. von Olphen, "Introduction to Clay Colloid Chemistry", 2nd Ed., J. Wiley & Sons, N.Y.; Schönfeldt, "Grenzflächenaktive Äthylenoxidaddukte", Wiss. Verlagsgesellschaft, Stuttgart 1976; Sisley and Wood, "Encyclopedia of Surface Active Agents", Chem. Publ. Co. Inc., N.Y. 1964; Watkins, "Handbook of Insecticide Dust Diluents and Carriers", 2nd Ed., Darland Books, Caldwell N.J.; Winnacker-Küchler, "Chemische Technologie", Band 7, C. Hanser Verlag München, 4. Auflage 1986.

Außer den vorstehend genannten Formulierungshilfsmitteln können die Herbizid-Komponenten der nutzpflanzenschützenden Mittel gegebenenfalls übliche Haft-, Netz-, Dispergier-, Penetrations-, Emulgier-, Konservierungs-, Frostschutz-, Füll-, Träger- und Farbstoffe, Entschäumer, Verdunstungshemmer sowie den pH-Wert oder die Viskosität beeinflussende Mittel enthalten.

Je nach Art der Formulierung enthalten die Herbizid-Komponenten der nutzpflanzenschützenden Mittel in der Regel 0,1 bis 99 Gew.-% (Gewichtsprozent), insbesondere 0,2 bis 95 Gew.-%, einen oder mehrere herbizide Wirkstoffe. Weiterhin enthalten sie 1 bis 99,9, insbesondere 4 bis 99,5 Gew.-%, eines oder mehrerer fester oder flüssiger Zusatzstoffe und 0 bis 25, insbesondere 0,1 bis 25 Gew.-% eines Tensids. In emulgierbaren Konzentraten beträgt die Wirkstoffkonzentration in der Regel 1 bis 90, insbesondere 5 bis 80 Gew.-%. Stäubemittel enthalten üblicherweise 1 bis 30, vorzugsweise 5 bis 20 Gew.-% Wirkstoff. In Spritzpulvern beträgt die Wirkstoffkonzentration in der Regel 10 bis 90 Gew.-%. Bei den in Wasser dispergierbaren Granulaten liegt der Gehalt an Wirkstoff beispielsweise zwischen 1 und 95 Gew.-%, vorzugsweise zwischen 10 und 80 Gew.-% .

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Granulate sowie versprühbare Lösungen werden vor der Anwendung üblicherweise nicht mehr mit weiteren inerten Stoffen verdünnt. Mit den äußeren Bedingungen wie Temperatur, Feuchtigkeit, der Art des verwendeten Herbizids u. a. variiert die erforderliche Aufwandmenge der Safener.

Die nachfolgenden Beispiele erläutern die Erfindung, limitieren diese jedoch nicht.

### Biologische Beispiele

### 1. Material und Methoden

Die Versuche wurden im Freiland durchgeführt (Liberia, Provinz Guanacaste, Costa Rica, Juni 2011). Die Saatgutaussaatmenge betrug 138 kg/ha. Das Saatgut wurde unmittelbar vor der Aussaat mit verschiedenen Saatgutbehandlungs-Wirkstoffen in einem kommerziellen Beizgerät der Firma Gustafson behandelt. Die Aussaat erfolgte in Parzellen von 400 m² (20 m x 20 m; n = 1). Nachfolgend wurden verschiedene Herbizide im Vorauflauf mit 200 L Wasser/ha appliziert. Die Auswertung der Pflanzenverträglichkeit erfolgte 15 Tage nach der Aussaat (15 DAS) durch Zählen der aufgelaufenen Nutzpflanzen pro m² und einer Bonitur auf sichtbare Schäden.

### 2. Ergebnisse

**Tab. 1: Verbesserung der Pflanzenverträglichkeit**

| Behandlung mit Safener | g a.i./kg Saatgut | Behandlung mit Herbizid | g a.i./ha | Anzahl aufgelaufener Nutzpflanzen/ m² (15 DAS) | Prozent (%) |
|---|---|---|---|---|---|
| Unbehandelt | - | Herbizid 1 (1) | 1140 | 25.2 | 100 |
| Saatgutbehandlungs-Wirkstoff 1 (2) | 3,75 | Herbizid 1 (1) | 1140 | 60.3 | 239 |
| Saatgutbehandlungs-Wirkstoff 1 (3) | 3,75 | Herbizid 1 (1) | 1140 | 37 | 147 |

| | | | | | |
|---|---|---|---|---|---|
| Nutzpflanze: Reis (Sorte: Palmar 18); a.i. = Aktivsubstanz; (1) Oxadizon (Ronstar® 380 SC); (2) Thiodicarb (Larvin® 375 SC); (3) Thiodicarb (Semevin® 350 FS) | | | | | |

**Tab. 2: Verbesserung der Pflanzenverträglichkeit**

| Behandlung mit Safener | g a.i./kg Saatgut | Behandlung mit Herbizid | g a.i./ha | Anzahl aufgelaufener Nutzpflanzen/ m² (15 DAS) | Prozent (%) |
|---|---|---|---|---|---|
| Unbehandelt | - | Herbizid 2 (1) | 600 | 20.7 | 100 |
| Saatgutbehandlungs-Wirkstoff 1 (2) | 3,75 | Herbizid 2 (1) | 600 | 48.5 | 234 |
| Saatgutbehandlungs-Wirkstoff 1 (3) | 3,75 | Herbizid 2 (1) | 600 | 56.1 | 271 |

| | | | | | |
|---|---|---|---|---|---|
| Nutzpflanze: Reis (Sorte: Palmar 18); a.i. = Aktivsubstanz; (1) Oxadiargyl (Raft® 400 SC); (2) Thiodicarb (Larvin® 375 SC); (3) Thiodicarb (Semevin® 350 FS | | | | | |

Boniturergebnisse: Die Nutzpflanzen, die nicht mit dem Saatgutbehandlungs-Wirkstoff aus der Gruppe der Carbamat-Insektizide behandelt wurden, zeigten neben der insgesamt deutlich geringeren Anzahl aufgelaufener Pflanzen pro Quadratmeter deutliche Vergilbungen und Deformationen, die durch die Behandlung mit verschiedenen Oxadiazolon-Herbiziden verursacht wurden. Alle Parzellen mit Saatgutbehandlungs-Wirkstoffen behandelten Nutzpflanzen hatten dagegen keine sichtbaren Schäden durch die Herbizidbehandlung und zeigten daneben auch eine deutlich verbessere Vitalität.

### 3. Schlussfolgerung

Die Ergebnisse zeigen eine deutliche Verbesserung des Nutzpflanzenauflaufes nach Saatgutbehandlung mit dem Saatgutbehandlungs-Wirkstoff aus der Gruppe der Carbamat-Insektizide. Dies zeigt, dass diese Wirkstoffe einen Safener-Effekt gegenüber den Oxadiazolon-Herbiziden bewirken. Höhere Aufwandmengen dieser Herbizide, die zur erfolgreichen Unkrautbekämpfung benötigt werden, können demnach ohne Schädigung der Nutzpflanze eingesetzt werden, wenn deren Saatgut vorher mit Saatgutbehandlungs-Wirkstoffen aus der Gruppe der Carbamat-Insektizide behandelt wurde.

## Patentansprüche

1. Verwendung von Saatgutbehandlungs-Wirkstoffen aus der Gruppe der Carbamat-Insektizide als Safener zum Vermeiden oder Reduzieren von phytotoxischen Wirkungen von Herbiziden aus der Gruppe der Oxadiazolone an Nutzpflanzen, vorzugsweise Kulturpflanzen.

2. Verwendung nach Anspruch 1, **dadurch gekennzeichnet, dass** die Saatgutbehandlungs-Wirkstoffe ausgewählt sind aus der Gruppe bestehend aus Bendiocarb, Carbaryl, Benfuracarb, Carbofuran, Carbosulfan, Decarbofuran, Furathiocarb, Dimetan, Dimetilan, Hyquincarb, Isolan, Pirimicarb, Pyramat, Pyrolan, Alanycarb, Aldicarb, Aldoxycarb, Butocarboxim, Butoxycarboxim, Methomyl, Nitrilacarb, Oxamyl, Tazimcarb, Thiocarboxime, Thiodicarb, Thiofanox, Allyxycarb, Aminocarb, Bufencarb, Butacarb, Carbanolate, Cloethocarb, CPMC, Dicresyl, Dimethacarb, Dioxacarb, EMPC, Ethiofencarb, Fenethacarb, Fenobucarb, Isoprocarb, Methiocarb, Metolcarb, Mexacarbate, Promacyl, Promecarb, Propoxur, Trimethacarb, XMC, Xylylcarb; bevorzugt Thiodicarb, Methiocarb; besonders bevorzugt Thiodicarb.

3. Verwendung nach Anspruch 1 oder 2, **dadurch gekennzeichnet, dass** die Oxadiazolon-Herbizide ausgewählt sind aus der Gruppe bestehend aus Dimefuron, Methazole, Oxadiargyl, Oxadiazon; bevorzugt Oxadiargyl, Oxadizon.

4. Verwendung nach einem oder mehreren der Ansprüche 1 bis 3, **dadurch gekennzeichnet, dass** es sich bei den Nutzpflanzen um Reiskulturen handelt.

5. Nutzpflanzenschützende Mittel, **dadurch gekennzeichnet, dass** es Saatgutbehandlungs-Wirkstoffe, wie in einem der Ansprüche 1 oder 2 definiert, gegebenenfalls in Form einer Beizmittel-Formulierung, in Kombination mit Herbiziden, und gegebenenfalls Formulierungshilfsmitteln enthält.

6. Nutzpflanzenschützende Mittel nach Anspruch 5, **dadurch gekennzeichnet, dass** es Herbizide wie in Anspruch 3 definiert, enthält.

7. Verfahren zum Schützen von Kultur- oder Nutzpflanzen vor phytotoxischen Wirkungen von Herbiziden, welche Schäden an Pflanzen verursachen, **dadurch gekennzeichnet, dass** man die Wirkstoffe aus der Gruppe der Carbamat-Insektizide, wie in einem der Ansprüche 1 oder 2 definiert, als Safener auf dem Saatgut der Nutzpflanzen, vorzugsweise in einer wirksamen Menge, anwendet.

8. Verfahren zum Schützen von Nutz- oder Kulturpflanzen nach Anspruch 7, **dadurch gekennzeichnet, dass** man eine oder mehrere Verbindungen der Herbizide vor, nach oder gleichzeitig mit dem Saatgut der Nutzpflanzen, vorzugsweise in einer wirksamen Menge, auf Samen, Pflanzenteile, Ackerboden oder Wasser appliziert.

9. Verfahren nach Anspruch 8, **dadurch gekennzeichnet, dass** die Herbizid-Applikation im Vorauflaufverfahren erfolgt.

10. Verfahren nach Anspruch 8, **dadurch gekennzeichnet, dass** die Herbizid-Applikation im Nachauflaufverfahren erfolgt.

11. Verfahren zur selektiven Bekämpfung von Schadpflanzen in Nutzpflanzenkulturen, **dadurch gekennzeichnet, dass** man eine wirksame nutzpflanzen-schützende Menge einer oder mehrerer Verbindungen der Saatgutbehandlungs-Wirkstoffe, wie in einem der Ansprüche 1 oder 2 definiert, gegebenenfalls in Form einer Beizmittel-Formulierung, vor, nach oder gleichzeitig mit dem Saatgut der Nutzpflanzen, mit einer gegen Schadpflanzen wirksamen Menge eines oder mehrerer Herbizide auf Samen, Pflanzenteile, Ackerboden oder Wasser appliziert.
